# EUROPEAN PATENT SPECIFICATION

(11) **EP 2 553 279 B1**
(45) Date of publication and mention of the grant of the patent: **13.07.2016**
(21) Application number: 11762121.9
(22) Date of filing: 30.03.2011
(51) Int. Cl.: F16C 3/10, F16C 3/14

(54) **HOLLOW CRANKSHAFT FOR IC ENGINES**
HOHLE KURBELWELLE FÜR IC-MOTOREN
VILEBREQUIN CREUX POUR MOTEURS À COMBUSTION INTERNE

(30) Priority: 31.03.2010 IN MU10732010
(43) Date of publication of application: 06.02.2013
(73) Proprietor: Tata Motors Limited, 400 001 Mumbai, Maharashtra (IN)
(72) Inventor: PATHAK, Udayan, Hutatma Chowk Mumbai 400 001 (IN); SHINGADE, Vikas, Hutatma Chowk Mumbai 400 001 (IN); SENTHILKUMAR, V., Hutatma Chowk Mumbai 400 001 (IN); PATIL, Sanjay, Hutatma Chowk Mumbai 400 001 (IN); GOKHALE, Kedar, Hutatma Chowk Mumbai 400 001 (IN)
(74) Representative: Ottazzo, Marco Francesco Agostino
(86) International application number: PCT/IN2011/000220
(87) International publication number: WO 2011/121611

(56) References cited:
- EP-A1- 0 212 577
- CH-A- 262 644
- CH-A- 262 644
- DE-A1- 4 239 691
- JP-A- 63 275 809
- JP-U- 59 068 820
- JP-U- 59 195 218
- JP-U- S59 195 218
- US-A- 1 588 850
- US-A- 2 364 109
- US-A- 5 207 120

## Description

### FIELD OF INVENTION:

This invention relates to crankshaft with hollow sections and method of making the same. Crankshaft is one of the basic components of IC engine which is subjected to severe thrust from piston and connecting rod and in combination converts reciprocating motion of piston into rotary motion.

Conventionally, crankshafts are manufactured by either forging or casting route which is followed by machining. Yield of both these processes, forging and machining or casting and machining is 60 to 80% and 40 to 60% respectively. This results in huge machining cost and waste of valuable material in the form of chips. Secondly, such constructions are to be made with solid sections which results in addition of mass to the vehicle.

Current invention describes assembled crankshaft with hollow construction of Main Bearing hereinafter referred to as MB journals and Crank Pin hereinafter referred to as CP journals. This results in improved metallic yield between 85 to 95% during manufacturing and reduced weight of crankshaft. Conceptually current invention is applicable to all crankshafts.

### BACKGROUND OF INVENTION:

Crankshaft is one of the critical components of IC engine which is continuously subjected to thrust from piston and connecting rod once the engine starts. Crankshaft should have structural load carrying capabilities, because, it is subjected to shear, torsion and bending stresses throughout its length. Higher frequency of rotation makes the load cycle further critical.

Conventionally, two routes are followed to manufacture a crankshaft i.e. casting and forging followed by machining. Metallic yield of Crankshaft castings is between 40 to 60% and rest of the material is machined off. Secondly, castings are prone to typical casting defects like porosity, blow holes, etc because of which during designing safety factor for crankshafts is maintained on higher side. This results in bigger cross sections ultimately increasing weight of crankshaft. Although, casting route is economical, demerits associated with it like casting defects paves way for alternate manufacturing routes.

Second popular manufacturing route is forging the billet to the shape and then machining this forging for finished dimensions. Mechanically forged crankshafts are superior in strength due to grain flow in desired direction. Metallurgical defects are absent which improves reliability of different sections of crankshaft. This route is also economical competitive due to higher production rates. But, major disadvantage with this manufacturing route is extensive machining similar to cast crankshafts. Extensive machining not only increase cost but generates metallic waste in the form of chips. Metallic yield of forged crankshafts is between 60 to 80%.

There have been successful demonstrations of assembled crankshafts, but with hollow solid crank pins and main bearing journals. Hollow construction of crankshaft is more popular by casting method. There are some demonstrations of assembled crankshafts with hollow crank pin and hollow main bearing, but, it was possible in combination with some type of welding.

Conventional crankshafts for IC engines are disclosed, for example, in documents JP S59 195218 U and US 1 588 850 A.

Current invention describes assembled crankshaft with hollow sections for MB journals and CP journals. Use of hollow sections results in reduced weight of crankshaft and saves lot of metallic waste which would otherwise be generated during machining. Metallic yield of crankshaft manufactured by assembly of hollow sections is between 90 to 95%. In current invention MB journals and CP journals chilled and are shrunk fitted into moderately heated lobe resulting into a interference fit.

### OBJECT OF THIS INVENTION:

1) The main object of the invention is to reduce weight of crankshaft by adopting hollow construction.
2) Another invention is to redesign the crankshaft to reduce criticality of fillets and suggest alternate design without any fillet.
3) Yet another objective is to reduce metallic waste generated during machining and improve metallic yield of the process.

### SUMMARY OF INVENTION:

As a concept, assembled crankshaft with hollow construction is applicable for all crankshafts of IC engines. As a case, this concept is demonstrated for crankshaft for two cylindered IC engine. Two cylinder IC has engine has two CP journals and three MB journals. Both the CP journals are located on one side and not on opposite sides. Main bearing journal and crankpin journals are proposed in hollow construction. Stress analysis is done with the help of Finite Element Analysis and accordingly materials for different sections are selected. Wall thickness of crank pin & main bearing journals is maintained between 4 to 8 mm. MB journals are found to be stressed to 175 to 350 MPa and stress on crank pins is between 250 to 380 MPa. Considering stress levels CP and MB journals can be manufactured in EN8 steel in hardened and tempered condition.

Assembly of loose parts is done with the help of fixtures.

### STATEMENT OF INVENTION:

Accordingly the present invention discloses a hollow crankshaft for IC engines comprising
plurality of Main Bearing (MB) Journals (5) and Crank Pin (CP) Journals (3) both constituted from hollow section;
plurality of flanges (1) configured with a blind counter bore (10) for accommodating said Main Bearing (MB) Journal (5) and a counter hole (9) for accommodating Crank Pin (CP) Journal (3), one through hole (8) in counter hole for Crank Pin (CP) Journals (3) and one through hole (4) connecting said Main Bearing (MB) Journals (5) and Crank Pin (CP) Journals (3);
at least one hole provided on each of said (MB) Journals (5) and Crank Pin (CP) Journals (3) for providing oil through it for lubrication;
at least one arrangement provided on crankshaft for restraining oil drain from the crankshaft when not in operation; and
at least one lid (2) provided on through hole (8) drilled from counter bore for CP journal.

Accordingly the present invention also discloses a hollow crankshaft for IC engines comprising
plurality of Main Bearing (MB) Journals (5) and Crank Pin (CP) Journals (3) both constituted from hollow section are provided with chamfer at the ends of said CP journal and said MB journal such that when assembled in crankshaft ensures an opening (4') to connect them for oil lubrication;
plurality of flanges (1) configured with a blind counter bore (10) for accommodating said Main Bearing (MB) Journal (5) and a counter hole (9) for accommodating Crank Pin (CP) Journal (3);
at least one hole provided on each of said (MB) Journals (5) arid Crank Pin (CP) Journals (3) for providing oil through it for lubrication;
at least one arrangement provided on crankshaft for restraining oil drain from the crankshaft when not in operation.

### BRIEF DESCRIPTION OF DRAWING:

According to the present invention
Figure 1 shows a hollow crankshaft.
Figure 2 shows Unit of a first main bearing journal, first crankpin journal & a flange.
Figure 3 shows an alternate design construction.
Figure 4 shows First main bearing, first crank pin and flange of alternate construction.

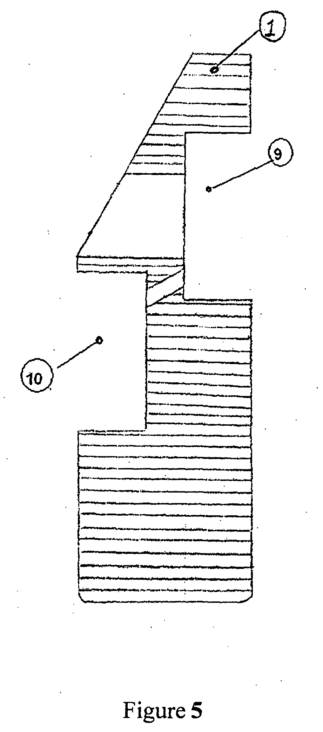

Figure 5 shows Construction of flange.

### DETAILED DESCRIPTION OF INVENTION:

To demonstrate the hollow construction of a crankshaft, crankshaft for IC engine is selected. Current invention illustrates the hollow construction and method of making the same. The exemplary IC engine is a two cylinder engine with both the pins on one side. Weight of a two cylinder engine crankshaft is 6.37 kg in solid construction, which reduces to 5.2 kg in hollow construction. This leads reduction in weight by 18.3 %. Similarly the weight crank shaft of three cylinder, four cylinder or any multiple cylinder IC engine can be saved providing such hollow construction.

Conventionally, crankshafts are manufactured by casting or forging route. This route entails heavy machining operations and leads to metallic waste. Almost 20 to 40% of material is machined off from a forged crankshaft. Cast crankshaft involves wastages to the similar level and total waste is close to 40 to 60 %. Although, metallic waste can be recycled, involves cost and energy for conversion. Hence, such designs are not environment friendly and neither economical. Metallic yield for hollow crankshaft is 90 to 95% which means there is at least 30 to 55% improvement in metallic yield. This improvement in metallic yield would save energy and cost for conversion of scrap to metal.

As compared to these routes hollow construction is a very cost effective and economical method of producing a crankshaft. MB (main bearing) journals and CP (crank pin) journals can be converted to hollow construction, and in case of IC engine it is demonstrated that assembled-hollow construction of crankshaft survives similar load conditions as crankshaft in solid construction.

Flanges are subjected to the stress levels of 300 to 380MPa and CP journals are subjected to stresses of the order of 250 to 380 MPa. Low alloy medium carbon steel, such as EN8 steel in hardened and tempered condition can be used for CP journals, MB journals and flanges with required reliability.

Loose pieces of CP journal, MB journal and flanges are held in position and assembled with the help of precision fixtures. Fixtures used for assembling are manufactured with precise dimensional controls. Assembly of said MB journal (5) and CP journal (3) to their respective counter bores (10) and (9) in said flanges increases the circumferential surface area of contact between said MB journal and CP journal and their respective counter bores in said flanges. This allows distribution of stress to said circumferential surface area of contact thereby avoiding conventional failure of crank shaft at fillet radius.

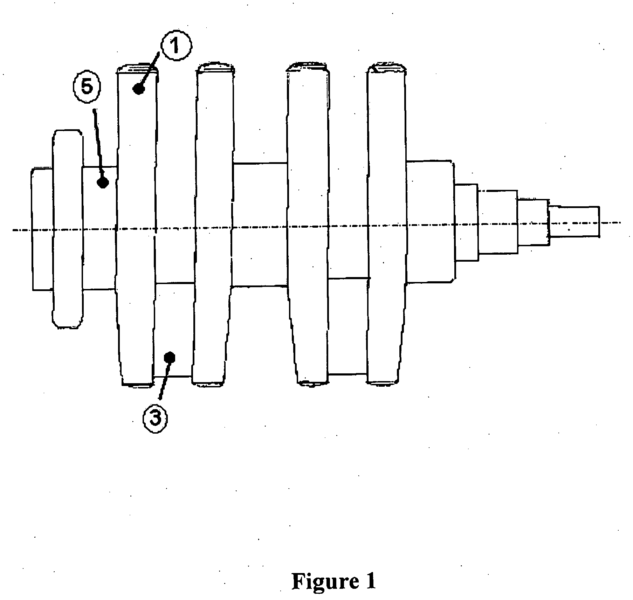

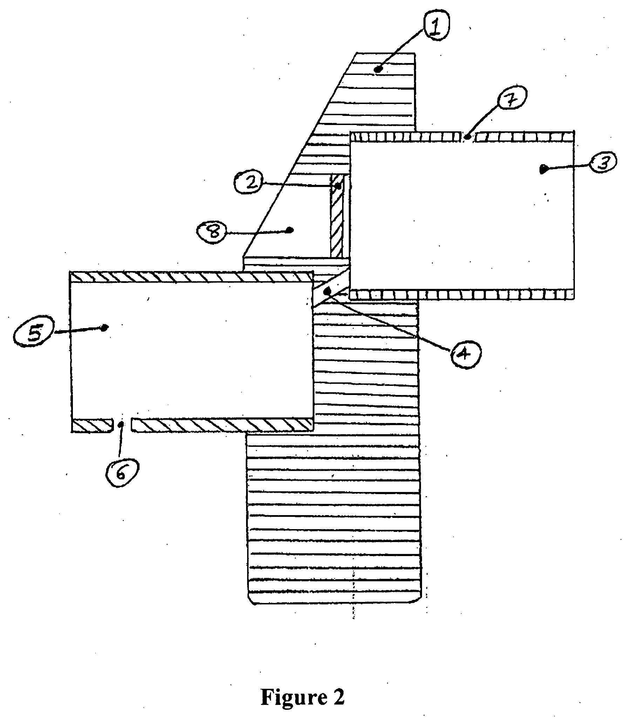

Use of hollow crank pins result in significant weight reduction because it also reduces counter weights on flanges. Fig 1 is a sketch of assembled hollow crankshaft. Fig 2 describes assembly features of first main MB journal (5), first CP journal (3) and a flange in-between (1). Weight of the crankshaft can be optimized by reducing thickness of flange at CP journal end. Flange is manufactured with one blind counter bore (10) for MB journal, one counter hole (9) for CP journal and one through hole (8) in counter hole (9) for CP journal. CP journal and MB journal are tubes with some specified predetermined thickness to suit the service loads. Dimensions of MB journal and CP journal and counter bores in flange are such that interference fit diametrical interference of 0.12 to 0.15 mm is achieved. Flange is held on fixture and CP & MB journals are shrunk fitted or has interference fit. Because assembly of loose parts is critical process, there is need to provide a through hole in flanges. During assembly, guide rod on fixture passes through this through hole and assists in maintaining relative dimensional tolerance of assembly of crankshaft. Similar hole through counter bore for MB journal should be provided for additional guide rods, if necessary to ensure further control on positional and dimensional tolerances. Flange is also provided with an oil hole (4), which connects cavities of CP journal & MB journal. During application, oil is supplied through engine block to oil hole (6) on MB journal. Cavity of MB journal is filled with oil, then through oil hole (4) in the flange, oil is supplied to cavity of crank pin. After this cavity is filled, oil is supplied for lubrication through oil hole (7) on CP journal. While not in operation there is threat of oil drain which can be addressed by providing a spring and a ball arrangement on engine block, just near oil hole (6), on MB journal. The through hole drilled from counter bore for CP journal needs to be sealed by a lid (2), to ensure continuous supply of oil for lubrication.

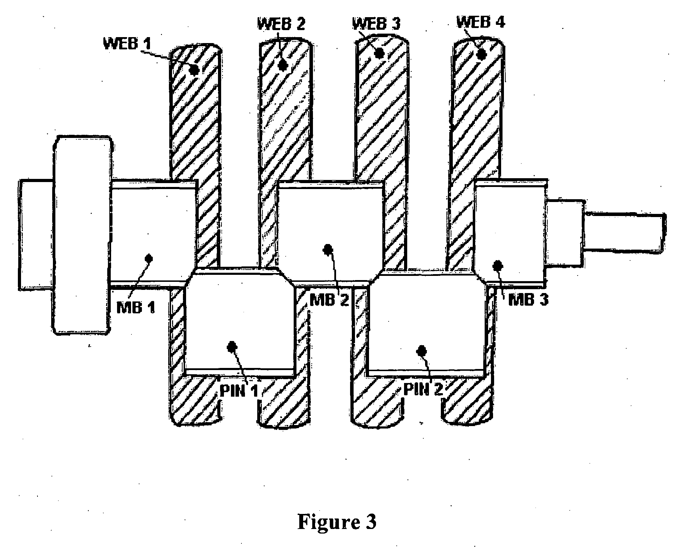

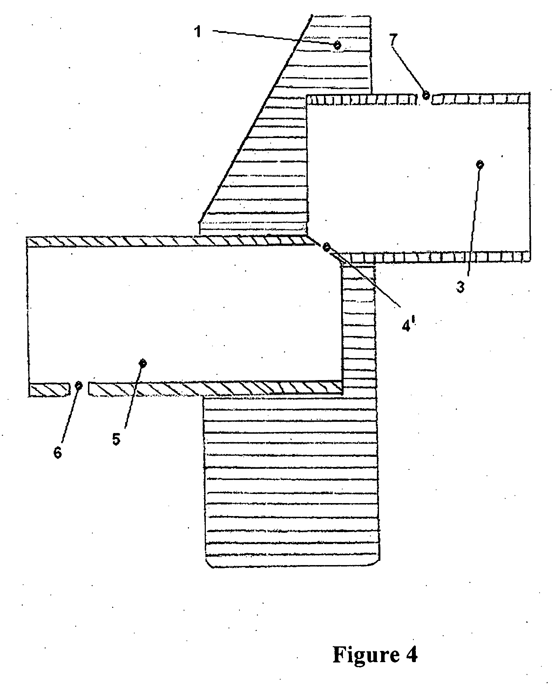

Another embodiment or Alternate construction for assembled crankshaft with hollow CP & MB journals is shown in fig 3. Fig 4 shows main difference with the construction shown in fig 2. Oil hole (4) shown in the fig 2, is eliminated in construction shown in fig 4. Chamfer provided at the end of CP journal & MB journal are so assembled to ensure an opening (4') with area more than the sectional area of oil hole (7) on CP journal. In Figure 4 the First main bearing, first crank pin and flange of alternate construction with main bearing (5) and crank pin (3) are shown. Number (1) is flange or web. Number (4') is opening to pass lubricating oil from MB to CP. Through holes may be drilled from counter bores for CP journal & MB journal to allow assembly guide rods to pass through, as discussed for fig 2.

After starting engine, oil pressure builds and through hole in MB (6) enters the cavity of MB journal. Once MB journal cavity is full, then through oil (4) hole in flange, oil enters cavity of crank pin. Through hole (7) in crank pin, oil is supplied for lubrication.

Flange is manufactured by powder metallurgy route or by forming or by machining rolled sections. Powder metallurgy route provides better control over weight. CP & MB journals are manufactured from tubes either seamless tubes or welded tubes.

Flange is held on fixture and CP & MB journals are shrunk fitted. Assembly starts with a flange and either a CP journal or a MB journal. Then, assembly is continued in sequence by assembling adjacent parts. Dimensional accuracies of crank shaft are controlled by dimensional accuracies of loose parts and tolerances of assembly fixture.

The foregoing description is a specific embodiment of the present invention. It should be appreciated that this embodiment is described for purpose of illustration only, and that numerous alterations and modifications may be practiced by those skilled in the art without departing from the scope of the invention. It is intended that all such modifications and alterations be included insofar as they come within the scope of the invention as claimed or the equivalents thereof.

## Claims

1. A hollow crankshaft for IC engines comprising:
- a plurality of main bearing (MB) journals (5) and crank pin (CP) journals (3) both constituted from hollow section;
- a plurality of flanges (1) configured with a blind counter bore (10) for accommodating said main bearing (MB) journal (5) and a counter hole (9) for accommodating crank pin (CP) journal (3), one through hole (8) in counter hole for crank pin (CP) journals (3) and one through hole (4) connecting said main bearing (MB) journals (5) and crank pin (CP) journals (3);
- at least one hole provided on each of said main bearing (MB) journals (5) and crank pin (CP) journals (3) for providing oil through it for lubrication;
- at least one arrangement provided on crankshaft for restraining oil drain from the crankshaft when not in operation; and
- at least one lid (2) provided on through hole (8) drilled from counter bore for crank pin (CP) journal (3),
wherein assembly of said main bearing (MB) journal (5) and crank pin (CP) journal (3) to their respective counter bores (10) in said flanges (1) is configured to increase the circumferential surface area of contact between said main bearing (MB) journal (5) and crank pin (CP) journal (3) and their respective counter bores (10) for distribution of stress to said circumferential surface area of contact, thereby avoiding critical loading of crank shaft at fillet radii.

2. A hollow crankshaft for IC engines comprising:
- a plurality of main bearing (MB) journals (5) and crank pin (CP) journals (3) both constituted from hollow section are provided with chamfer at the ends of said crank pin (CP) journal (3) and said main bearing (MB) journal (5) such that when assembled in crankshaft ensures an opening (4') to connect them for oil lubrication;
- a plurality of flanges (1) configured with a blind counter bore (10) for accommodating said main bearing (MB) journal (5) and a counter hole (9) for accommodating crank pin (CP) journal (3);
- at least one hole provided on each of said main bearing (MB) journals (5) and crank pin (CP) journals (3) for providing oil through it for lubrication; and
- at least one arrangement provided on crankshaft for restraining oil drain from the crankshaft when not in operation,
wherein assembly of said main bearing (MB) journal (5) and crank pin (CP) journal (3) to their respective counter bores (10) in said flanges (1) is configured to increase the circumferential surface area of contact between said main bearing (MB) journal (5) and crank pin (CP) journal (3) and their respective counter bores (10) for distribution of stress to said circumferential surface area of contact, thereby avoiding critical loading of crank shaft at fillet radii.

3. The crankshaft as claimed in claim 2, wherein said opening provided to connect chamfer at the end of said crank pin (CP) journal (3) and said main bearing (MB) journal (5) is having cross-sectional area more than the sectional area of oil hole (7) on crank pin (CP) journal (3).

4. The crankshaft as claimed in claim 1 or 2, wherein said crank pin (CP) journals (3) and main bearing (MB) journals (5) are hollow sections manufactured from tubes either seamless tubes or welded tubes with predetermined thickness selected to suit the service loads and said flanges are manufactured by powder metallurgy route or by forming or by machining rolled sections.

5. The crankshaft as claimed in claim 1 or 2, wherein said main bearing (MB) journal (5) and crank pin (CP) journal (3) are configured to be fitted in their respective counter bores in said flanges to achieve interference fit of diametrical interference of 0.12 to 0.15 mm.

6. The crankshaft as claimed in claim 1 or 2, wherein said crank pin (CP) journal (3), main bearing (MB) journal (5) and flanges are held in position and assembled in sequence by assembling adjacent parts with the help of precision fixtures.

7. The crankshaft as claimed in claim 1, wherein said through hole (8) in counter hole for crank pin (CP) journals (3) is configured for providing guide rod on fixture passes through this through hole and assists in maintaining relative dimensional tolerance of assembly of crankshaft.

8. The crankshaft as claimed in claim 1, wherein said main bearing (MB) journal (5) is also selectively provided with through hole for providing additional guide rods, to ensure further control on positional and dimensional tolerances.

9. The crankshaft as claimed in claim 1 or 2, wherein the material of crank pin (CP) journals (3), main bearing (MB) journals (5) and flanges is low alloy medium carbon steel, such as EN8 steel in hardened and tempered condition.

10. The crankshaft as claimed in claim 1 or 2, wherein said arrangement for restraining oil drain from the crankshaft when not in operation comprises of spring and ball arrangement on engine block near oil hole (6) on main bearing (MB) journal (5).

11. The crankshaft as claimed in claim 1 or 2, wherein said lubricating oil is configured to be supplied through engine block to oil hole (6) on main bearing (MB) journal cavity then through oil hole (4) in the flange to cavity of crank pin through oil hole (7) on crank pin (CP) journal (3) for lubrication.

## Patentansprüche

1. Hohle Kurbelwelle für IC-Motoren umfassend:
- mehrere Hauptlager- (MB) Sitze (5) und Kurbelzapfen- (CP) Sitze (3), die beide aus Hohlprofilen bestehen;
- mehrere Flansche (1), die ausgebildet sind mit einer Blindgegenbohrung (10) zur Aufnahme des Hauptlager- (MB) Sitzes (5) und mit einer Gegenbohrung (9) zur Aufnahme des Kurbelzapfen- (CP) Sitzes (3), wobei ein Durchgangsloch (8) in der Gegenbohrung für Kurbelzapfen- (CP) Sitze (3) und ein Durchgangsloch (4) die Hauptlager- (MB) Sitze (5) und Kurbelzapfen- (CP) Sitze (3) verbinden;
- mindestens ein Loch, das auf jedem der Hauptlager- (MB) Sitze (5) und Kurbelzapfen- (CP) Sitze (3) vorgesehen ist, um Öl hierdurch zur Schmierung bereitzustellen;
- mindestens eine auf der Kurbelwelle vorgesehene Anordnung zum Zurückhalten des aus der Kurbelwelle auslaufenden Öls, wenn diese nicht in Betrieb ist; und
- mindestens einen Deckel (2), der auf dem Durchgangsloch (8) vorgesehen ist, das von der Gegenbohrung für den Kurbelzapfen- (CP) Sitz (3) gebohrt ist,
wobei die Anordnung des Hauptlager- (MB) Sitzes (5) und des Kurbelzapfen- (CP) Sitzes (3) an ihren jeweiligen Aufbohrungen (10) in den Flanschen (1) ausgebildet ist, um die Umfangskontaktfläche zwischen dem Hauptlager- (MB) Sitz (5) und dem Kurbelzapfen- (CP) Sitz (3) und ihren jeweiligen Gegenbohrungen (10) zur Verteilung der Spannung auf die Umfangskontaktfläche zu vergrößern, wodurch kritische Belastungen der Kurbelwelle an den Abrundungsradien vermieden werden.

2. Hohle Kurbelwelle für IC-Motoren umfassend:
- mehrere Hauptlager- (MB) Sitze (5) und Kurbelzapfen- (CP) Sitze (3), die beide aus Hohlprofilen bestehen und mit Abschrägungen an den Enden des Kurbelzapfen- (CP) Sitzes (3) und des Hauptlager- (MB) Sitzes (5) versehen sind, so dass beim Zusammenbauen in der Kurbelwelle eine Öffnung (4') gewährleistet ist, um sie zur Ölschmierung zu verbinden;
- mehrere Flansche (1), die mit einer Blindgegenbohrung (10) zur Aufnahme des Hauptlager- (MB) Sitzes (5) und mit einer Aufbohrung (9) zur Aufnahme des Kurbelzapfen- (CP) Sitzes (3) ausgebildet sind;
- mindestens ein Loch, das auf jedem der Hauptlager- (MB) Sitze (5) und Kurbelzapfen- (CP) Sitze (3) vorgesehen ist, um hierdurch Öl zur Schmierung bereitzustellen; und
- mindestens eine auf der Kurbelwelle vorgesehene Anordnung zum Zurückhalten des aus der Kurbelwelle auslaufenden Öls, wenn diese nicht in Betrieb ist,
wobei die Anordnung des Hauptlager- (MB) Sitzes (5) und des Kurbelzapfen- (CP) Sitzes (3) an ihren jeweiligen Aufbohrungen (10) in den Flanschen (1) ausgebildet ist, um die Umfangskontaktfläche zwischen dem Hauptlager- (MB) Sitz (5) und dem Kurbelzapfen- (CP) Sitz (3) und ihren jeweiligen Aufbohrungen (10) zur Verteilung der Spannung auf die Umfangskontaktfläche zu vergrößern, wodurch kritische Belastungen der Kurbelwelle an den Abrundungsradien vermieden werden.

3. Kurbelwelle nach Anspruch 2, wobei die Öffnung, die zur Verbindung der Abschrägung am Ende des Kurbelzapfen- (CP) Sitzes (3) und des Hauptlager- (MB) Sitzes (5) vorgesehen ist, eine Querschnittsfläche aufweist, die größer als die Querschnittsfläche des Öllochs (7) auf dem Kurbelzapfen-(CP) Sitz (3) ist.

4. Kurbelwelle nach Anspruch 1 oder 2, wobei die Kurbelzapfen- (CP) Sitze (3) und die Hauptlager- (MB) Sitze (5) Hohlprofile sind, die aus Rohren, entweder aus nahtlosen oder geschweißten Rohren, mit einer vorgegebenen Dicke hergestellt sind, die ausgewählt ist, um den Betriebsbeanspruchungen zu entsprechen, und wobei die Flansche mittels Pulvermetallurgie oder durch Formen oder Bearbeiten von Walzprofilen hergestellt sind.

5. Kurbelwelle nach Anspruch 1 oder 2, wobei der Hauptlager-(MB) Sitz (5) und der Kurbelzapfen- (CP) Sitz (3) ausgebildet sind, um in ihre jeweiligen Gegenbohrungen in den Flanschen eingesetzt zu werden, um einen Pressverband bei diametralem Übermaß von 0,12 bis 0,15 mm zu erhalten.

6. Kurbelwelle nach Anspruch 1 oder 2, wobei der Kurbelzapfen- (CP) Sitz (3), der Hauptlager- (MB) Sitz (5) und die Flansche in ihrer Lage gehalten und nacheinander zusammengebaut werden, indem benachbarte Teile mit Hilfe von Präzisionsvorrichtungen zusammengebaut werden.

7. Kurbelwelle nach Anspruch 1, wobei das Durchgangsloch (8) in der Gegenbohrung für die Kurbelzapfen- (CP) Sitze (3) ausgebildet ist, um eine Führungsstange auf der Vorrichtung vorzusehen, die sich durch das Durchgangsloch erstreckt und zur Aufrechterhaltung der relativen Maßtoleranz der Kurbelwellenanordnung beiträgt.

8. Kurbelwelle nach Anspruch 1, wobei der Hauptlager- (MB) Sitz (5) ferner wahlweise mit einem Durchgangsloch zum Bereitstellen zusätzlicher Führungsstangen versehen ist, um eine weitere Kontrolle der Lage- und Maßtoleranzen zu sicherzustellen.

9. Kurbelwelle nach Anspruch 1 oder 2, wobei das Material der Kurbelzapfen- (CP) Sitze (3), der Hauptlager- (MB) Sitze (5) und der Flansche niederlegierter Stahl mit mittlerem Kohlenstoffgehalt, wie beispielsweise gehärteter und vergüteter EN8-Stahl ist.

10. Kurbelwelle nach Anspruch 1 oder 2, wobei die Anordnung zum Zurückhalten des aus der Kurbelwelle auslaufenden Öls, wenn diese nicht in Betrieb ist, eine Feder- und Kugellageranordnung auf dem Motorblock in der Nähe des Öllochs (6) auf dem Hauptlager- (MB) Sitz (5) umfasst.

11. Kurbelwelle nach Anspruch 1 oder 2, wobei das Schmieröl ausgebildet ist, um durch den Maschinenblock zum Ölloch (6) auf der Hauptlager- (MB) Sitzenvertiefung, dann durch das Ölloch (4) auf dem Flansch zur Vertiefung des Kurbelzapfens durch das Ölloch (7) auf dem Kurbelzapfen- (CP) Sitz (3) zur Schmierung zugeführt zu werden.

## Revendications

1. Vilebrequin creux pour moteurs à combustion interne comprenant :
- une pluralité de tourillons (5) de vilebrequin (MB) et de tourillons (3) de manivelle (CP) tous constitués à partir d'une section creuse ;
- une pluralité de brides (1) configurées avec un contre-alésage borgne (10) pour recevoir ledit tourillon (5) de vilebrequin (MB) et un trou chanfreiné (9) pour recevoir le tourillon (3) de manivelle (CP), un trou passant (8) dans le trou chanfreiné pour tourillons (3) de manivelle (CP) et un trou passant (4) connectant lesdits tourillons (5) de vilebrequin (MB) et lesdits tourillons (3) de manivelle (CP) ;
- au moins un trou prévu sur chacun desdits tourillons (5) de vilebrequin (MB) et desdits tourillons (3) de manivelle (CP) pour fournir de l'huile à travers celui-ci pour la lubrification ;
- au moins un agencement prévu sur le vilebrequin pour limiter l'évacuation d'huile à partir du vilebrequin quand il n'est pas en service ; et
- au moins un couvercle (2) disposé sur le trou passant (8) percé à partir du contre-alésage pour le tourillon (3) de manivelle (CP),
dans lequel l'assemblage dudit tourillon (5) de vilebrequin (MB) et dudit tourillon (3) de manivelle (CP) avec leurs contre-alésages respectifs (10) dans lesdites brides (1) est configuré pour augmenter la surface circonférentielle de contact entre ledit tourillon (5) de vilebrequin (MB) et ledit tourillon (3) de manivelle (CP) et leurs contre-alésages respectifs (10) pour une distribution de contrainte sur ladite surface circonférentielle de contact, en évitant ainsi un chargement critique du vilebrequin au niveau des rayons de congé.

2. Vilebrequin creux pour moteurs à combustion interne comprenant :
- une pluralité de tourillons (5) de vilebrequin (MB) et de tourillons (3) de manivelle (CP) tous constitués à partir d'une section creuse sont pourvus d'un chanfrein au niveau des extrémités dudit tourillon (3) de manivelle (CP) et dudit tourillon (5) de vilebrequin (MB) de manière que, quand ils sont assemblés sur le vilebrequin, il garantisse qu'une ouverture (4') les connecte pour la lubrification d'huile;
- une pluralité de brides (1) configurées avec un contre-alésage borgne (10) pour recevoir ledit tourillon (5) de vilebrequin (MB) et un trou chanfreiné (9) pour recevoir le tourillon (3) de manivelle (CP) ;
- au moins un trou prévu sur chacun desdits tourillons (5) de vilebrequin (MB) et desdits tourillons (3) de manivelle (CP) pour fournir de l'huile à travers celui-ci pour la lubrification ; et
- au moins un agencement prévu sur le vilebrequin pour limiter l'évacuation d'huile à partir du vilebrequin quand il n'est pas en service,
dans lequel l'assemblage dudit tourillon (5) de vilebrequin (MB) et dudit tourillon (3) de manivelle (CP) avec leurs contre-alésages respectifs (10) dans lesdites brides (1) est configuré pour augmenter la surface circonférentielle de contact entre ledit tourillon (5) de vilebrequin (MB) et ledit tourillon (3) de manivelle (CP) et leurs contre-alésages respectifs (10) pour une distribution de contrainte sur ladite surface circonférentielle de contact, en évitant ainsi un chargement critique du vilebrequin au niveau des rayons de congé.

3. Vilebrequin selon la revendication 2, dans lequel ladite ouverture prévue pour connecter le chanfrein à l'extrémité dudit tourillon (3) de manivelle (CP) et dudit tourillon (5) de vilebrequin (MB) a une section transversale supérieure à la section transversale du trou de l'huile (7) sur le tourillon (3) de manivelle (CP).

4. Vilebrequin selon la revendication 1 ou 2, dans lequel lesdits tourillons (3) de manivelle (CP) et lesdits tourillons (5) de vilebrequin (MB) sont des sections creuses fabriquées à partir de tubes, soit des tubes sans soudure soit des tubes soudés, avec une épaisseur prédéterminée sélectionnée pour s'adapter aux charges d'exercice et lesdites brides sont fabriquées par la méthode de la métallurgie en poudre ou par formage ou par façonnage de profilés laminés.

5. Vilebrequin selon la revendication 1 ou 2, dans lequel ledit tourillon (5) de vilebrequin (MB) et ledit tourillon (3) de manivelle (CP) sont configurés pour être ajustés dans leurs contre-alésages respectifs dans lesdites brides pour obtenir un ajustement serré avec interaction diamétrale de 0,12 à 0,15 mm.

6. Vilebrequin selon la revendication 1 ou 2, dans lequel ledit tourillon (3) de manivelle (CP), ledit tourillon (5) de vilebrequin (MB) et lesdites brides sont maintenus en position et assemblés en séquence en assemblant des pièces adjacentes à l'aide d'équipements de précision.

7. Vilebrequin selon la revendication 1, dans lequel ledit trou passant (8) dans le trou chanfreiné pour les tourillons (3) de manivelle (CP) est configuré pour fournir une tige de guidage sur des passages d'équipement à travers ce trou passant et aide à maintenir une tolérance dimensionnelle relative de l'ensemble du vilebrequin.

8. Vilebrequin selon la revendication 1, dans lequel ledit tourillon (5) de vilebrequin (MB) est également pourvu sélectivement d'un trou passant pour fournir des tiges de guidage additionnelles pour garantir un contrôle ultérieur sur des tolérances dimensionnelles et de position.

9. Vilebrequin selon la revendication 1 ou 2, dans lequel le matériau des tourillons (3) de manivelle (CP), des tourillons (5) de vilebrequin (MB) et des brides est un acier à moyen carbone faiblement allié, tel qu'un acier EN8 dans une condition durcie et trempée.

10. Vilebrequin selon la revendication 1 ou 2, dans lequel ledit agencement pour limiter l'évacuation d'huile à partir du vilebrequin quand il n'est pas en service comprend un agencement de ressort et bille sur le bloc moteur près du trou de l'huile (6) sur le tourillon (5) de vilebrequin (MB).

11. Vilebrequin selon la revendication 1 ou 2, dans lequel ladite huile de lubrification est configurée pour être alimentée à travers le bloc moteur au trou de l'huile (6) sur la cavité du tourillon de vilebrequin (MB) puis à travers le trou de l'huile (4) dans la bride vers la cavité de la manivelle à travers le trou de l'huile (7) sur le tourillon (3) de manivelle (CP) pour la lubrification.
